# EUROPEAN PATENT APPLICATION

(11) **EP 1 061 529 A1**
(43) Date of publication of application: **20.12.2000**
(21) Application number: 00870126.0
(22) Date of filing: 13.06.2000
(51) Int. Cl.: G12B 21/02, G12B 21/04, G12B 21/08, G12B 21/10, G01B 7/34, G01N 27/00

(54) **A probe tip for the investigation of a substrate and a method of fabrication therof**

(30) Priority: 11.06.1999 US 138706 P
(71) Applicant: INTERUNIVERSITAIRE MICROELEKTRONICA CENTRUM VZW, 3001 Leuven (BE)
(72) Inventor: Hantschel, Thomas, 39439 Amesdorf (DE); Vandervorst, Wilfried, 2800 Mechelen (BE)
(74) Representative: Bird, William Edward

(57) **Abstract**

A probe tip configuration, being part of a probe (fig. 2) for use in a scanning proximity microscope, is disclosed, comprising a cantilever beam (1) and a probe tip structure (4). Said tip structure comprises a sloping member (2) and at least one probe tip (5). Said sloping beam is connected to said cantilever beam whereas said probe tip is placed on said sloping member. Cantilever beam, sloping member and probe tip can be composed of different materials and can be isolated each from another which makes an easy adjustment of the maximum penetration depth of the tip possible without limiting the resolution and makes it also possible to detect more than one signal of a sample at the same time using one cantilever beam. Further, the probe tip can be viewed from above.

Methods of making the probe tip configuration are described.

## Description

### FIELD OF THE INVENTION

The present invention is related to a probe, more particular a probe tip configuration and a method of fabricating such probe tip configuration are disclosed. This probe can be used as a sensing element in a scanning proximity microscope and can also be used for characterization purposes in related fields.

### BACKGROUND OF THE INVENTION

Scanning proximity microscopes (AFM, STM, MFM) operate by scanning the surface of a sample with a probe. Such a probe can be used e.g. for topography measurements or as a SSRM (Scanning Spreading Resistance Measurements) Probe, used for the determination of the resistance and carrier profile of a semiconductor element or for nano-potentiometry measurements of the electrical potential distribution on a semiconductor element. Such a probe usually consists essentially of a mounting block, a cantilever or stylus and a tip. The choice of the materials of which the mounting block, the cantilever and the tip are composed, strongly depends on the type of measurement the probe is intended for. For topography measurement a dielectric or a semi-conductive tip can be used whereas for resistance determination and nano-potentiometry a highly conductive tip preferably with high hardness and low wear is required.

In order to achieve a high resolution the tip of such a probe must have a very small radius of curvature. A classical probe tip, as e.g. described in the United States patent 5399232 consists of a single portion. Changing the dimensions of such a probe tip, in particular increasing the height, can be necessary to meet the specifications of the measurement setup in particular e.g. the tip to sample distance. An increase of the tip height leads to a significant increase of the aspect ratio. The mechanical stability of such high aspect ratio tips is limited, which makes them less suitable for electrical measurements where these tips are exposed to high forces being applied in order to provide a good electrical contact. Therefore stable and reliable classical probe tips can only be fabricated for a limited range of dimensions. Furthermore there is an ongoing effort and interest in continuously improving the detection resolution and consequently the probe resolution, which will even further limit the availability of reliable probe tips.

The probe tips as disclosed in US5,399,232 furthermore have as a drawback that the tips of the probe are not visible in a top view configuration such as in use in an optical microscope. This constraint puts severe limitations on the use of such probe for applications requesting high-precision positioning as the region of interest of the semiconductor device structure that is to be investigated can not be seen. Yet another drawback of the probe tip as disclosed in US5,399,232 is the fact that in a two-tip or multiple-tip configuration (two or multiple tips probing the semiconductor element that is to be investigated) the tips can not be brought close one to another. The distance of having two tips close one to another is limited to about 10 to 40 µm which distance for a number of applications is much too large. The investigation of semiconductor device structures often requests a spatial resolution of several µm or smaller.

In the prior art a probe tip configuration is suggested which partly overcomes this problem. The United States patent 5455419 describes a probe tip configuration where a tip is arranged on a pedestal. By dividing the probe tip into a pedestal and a tip, one can adapt the dimensions of the pedestal according to the specifications of the measurement set-up whereas the dimensions of the tip can be optimised independently. In United States patent 5455419 tip, pedestal and cantilever are composed of a single material. It is desirable to adjust the maximum penetration depth into the sample. Because of the special tip arrangement the penetration is limited to the tip while the pedestal can make contact with the sample surface without significant penetration. The maximum penetration depth can be altered by changing the dimensions, in particular the height of the tip. But because tip and pedestal are composed of a single material this easy adjustment of a maximum penetration depth into the sample is not applicable without drastically reducing the resolution. Furthermore the characteristics of both the pedestal and the tip can not be adapted to the physical quantity to be measured using different tip shapes and materials.

Also in the prior art a method of making such a probe tip configuration is suggested. United States patent 5282924 describes a method of fabricating said probe tip configuration where a tip is arranged on a pedestal. Said tip and said pedestal are composed of a single material which does not allow an easy adjustment of a maximum penetration depth into the sample. Furthermore the characteristics of both the pedestal and the tip can not be adapted to the physical quantity to be measured using different tip shapes and materials. A further drawback of this method is that there is no solution provided to realise a highly conductive probe tip. Tip, pedestal and cantilever beam are formed out of a single substrate material such as silicon. The cited document does not describe how to fabricate a probe with a highly conductive tip preferably with high hardness and low wear as desired for e.g. resistance determination. With cited method it is also not possible to fabricate a probe where probe tip and pedestal are isolated from each other e.g. for easy penetration depth adjustement or to reduce the capacitive coupling of the probe tip configuration to the sample by forming a pedestal which is composed of insulating materials.

### SUMMARY OF THE INVENTION

It is an object of the present patent application to disclose probe tips that overcome the drawbacks of probe tips of the prior art. Specifically in a first object of the present invention, a probe tip configuration is disclosed that allows for visualising the probe tip while measuring with the probe. It is another object of the present invention to disclose a probe tip that allows for having multiple probe tips in a close-neighbourhood configuration while recording features on a substrate such as a semiconductor element. Yet another object of the invention is to disclose a tip-on-tip probe tip configuration.

In an aspect of the invention a probe, more in particular a probe tip configuration, is disclosed. This probe comprises a mounting block 3 and a probe tip configuration. Said probe tip configuration comprises a cantilever beam land a tip structure, where said cantilever beam is fixed to the mounting block at one end and said tip structure 4 is fixed to the other free end of said cantilever beam. Said tip structure 4 may comprise at least one small probe tip, placed on a further tip portion in the form of a sloping member 2, which is connected to said end of said cantilever beam. The sloping member is preferably at an acute angle to a line formed by an extension of the cantilever beam.

A probe tip configuration being part of a probe for use in a scanning proximity microscope is disclosed, comprising a cantilever beam and a tip structure, said tip structure being fixed to an end of said cantilever beam, said tip structure comprising a first portion of a tip and a second portion of a tip, said first portion of a tip being a sloping member connected to said end of said cantilever beam, said second portion of a tip being placed on said first portion of a tip, characterised in that said sloping beam is sloping at an acute angle with respect to a line formed by an extension of the cantilever beam.

The cantilever beam, said first portion of a tip and said second portion of a tip may form a structure comprising at least two different materials.

This probe tip configuration can be used as a sensing element in a scanning proximity microscope. The special arrangement of the present invention allows the visualisation of the tip. It also allows adjustment of a maximum penetration depth into the sample surface by changing the height of the second portion of a tip. The characteristics of the second portion of a tip can be adapted to the physical quantity to be measured using different tip shapes and materials.

In another aspect of the invention said tip structure comprises a first portion of a tip in the form of a sloping member and more than one second portion or probe tip. This probe tip configuration makes it possible to detect more than one signal of a sample at the same time using only one first cantilever beam. The different second portions of a tip can be electrically and/or thermally isolated from each other and can have different characteristics. The different second portions of a tip can also be used to detect different physical quantities. In particular this probe tip configuration allows the use of one or more second portions of a tip as a current or voltage source. In this way, the other second portions of a tip can be used to detect the generated signal.

In a further aspect of the invention a method of fabricating a probe tip configuration is disclosed comprising a cantilever beam and a probe tip structure, said probe tip structure comprising a sloping member and at least one probe tip, said method comprising the steps of:
etching a substrate to create a first, substantially pyramidal etched pit, the pit having a plurality of faces which meet in an apex region;
masking at least one face of the pit but not masking the complete pit;
forming a material on the remaining parts of the pit including the apex region to thereby form the probe tip and the sloping member. The method also includes the step of removing a portion of the substrate with the first etched pit to free the probe tip and the sloping member. The method also includes etching at least one second small etch pit into the apex region of the said first etch pit using a second patterned mask layer as an etch mask before the material forming step.

The first etch pit may be in the form of a cylindrical, conical, truncated conical, substantially pyramidal or truncated pyramidal shape which can be realised by employing an etching solution such as KOH for the etching of the substrate, which results in a more truncated pyramidal etch pit with a flat apex region. Then a probe tip can be formed in the apex region of the truncated pyramid pit. Therefore a small etch pit on the bottom of the first etch pit is formed preferably by an anisotropic etching procedure resulting in a pyramidal or a conic shape. The substrate is finally removed using a thinning window at the backside of the substrate resulting a sloping member form for the first portion of the tip structure as well as freeing the probe tip itself. The sloping member and the probe tip can also be composed of different materials.

In still another aspect of the invention a method of fabricating a probe tip configuration is disclosed where a tip structure comprises a sloping member and at least two probe tips thereon. At least two probe tips can be formed on the flat apex region of the first etch pit to achieve high resolution. The different probe tips can be electrically and/or thermally isolated from each other. In an embodiment of this technique, the two probe tips can be isolated by the use of lithography patterning techniques. The step of isolating the probe tips can also be executed after the step of forming the two probe tips. Hereto the formed probe tip configuration can be cut in different parts using techniques known in semiconductor device processing. The two probe tips and sloping members resulting from this processing can be connected to different cantilever beams.

According to an object of the present invention, a probe tip configuration is disclosed that allows for visualising the probe tip while measuring with the probe. Hereto a probe tip configuration is disclosed, the probe tip being part of a probe for use in a scanning proximity microscope comprising at least one cantilever beam having a probe tip fixed to an end of said cantilever beam and said tip being visible in a top view configuration from substantially above said cantilever beam. This probe tip configuration can have two or more cantilever beams, each having a tip being fixed to an end of said cantilever beam and said tip being visible in a top view configuration from substantially above said cantilever beam. A method is disclosed for fabricating such probe tip configuration, the method comprising the steps of: etching a substrate to thereby create a first etch pit; covering only a part of said etched pit with at least one material while covering at least part of said substrate; and etching through a mask window at the backside of said substrate to thereby form said cantilever beam and simultaneously etching free said tip. The method can further comprise the steps of : etching said substrate using a first patterned hard mask layer as an etch mask, said etching step creating said first etch pit; and defining the cantilever beam. In an embodiment, said part of said etched structure can be about a quarter of said etched pit. The tip can have a pyramidal form, a quarter-pyramidal or a half-pyramidal tip form or any other form such as a truncated pyramid or another form.

### BRIEF DESCRIPTION OF THE DRAWINGS

FIG. 1 shows one particular schematic representation of a probe tip configuration comprising a probe tip formed integrally with a sloping cantilever beam portion in accordance with an embodiment of the present invention which allows visualisation of the probe tip while measuring with the probe.

FIG. 2 shows one particular schematic representation of a probe tip configuration comprising a probe tip formed on the end of a sloping cantilever beam portion in accordance with another embodiment of the present invention.

FIG. 3A shows a cross-sectional view of a probe tip formed integrally with a catilever beam which itself is attached to a second sloping cantilever beam in accordance with an embodiment of the present invention. The probe tip and first cantilever beam can be made of different materials Fig. 3B shows a cross-sectional view of a probe tip formed integrally with a cantilever beam which has a sloping front portion in accordance with an embodiment of the present invention. The probe tip and the cantilever beam can be made of the same material.

FIGS. 4A to D show the method steps in the manufacture of a probe tip in accordance with an embodiment of the present invention.

FIGS. 5A to J show the method steps in the manufacture of a probe tip in accordance with a further embodiment of the present invention.

FIGS. 6A to J show the method steps in the manufacture of a probe tip in accordance with a further embodiment of the present invention.

FIG. 7A to F show the method steps in the manufacture of a probe tips in accordance with a further embodiment of the present invention.

FIG 8 shows several embodiments of a probe tip configuration allowing for visualising the probe tip while measuring with the probe; in this figure a quarter-pyramidal second cantilever beam (a) is shown as the configuration shown in Fig. 1; also half-pyramidal second cantilever beams (b) (c) (d) are shown.

FIGS. 9A and B show two embodiments of a probe tip configuration that has multiple probe tips in a close-neighbourhood configuration while recording features on a substrate such as a semiconductor element

### DETAILED DESCRIPTION OF THE INVENTION

In relation to the appended drawings the present invention is described in detail in the sequel. Several embodiments are disclosed. It is apparent however that a person skilled in the art can imagine several other equivalent embodiments or other ways of practising the present invention, the spirit and scope thereof being limited only by the terms of the appended claims.

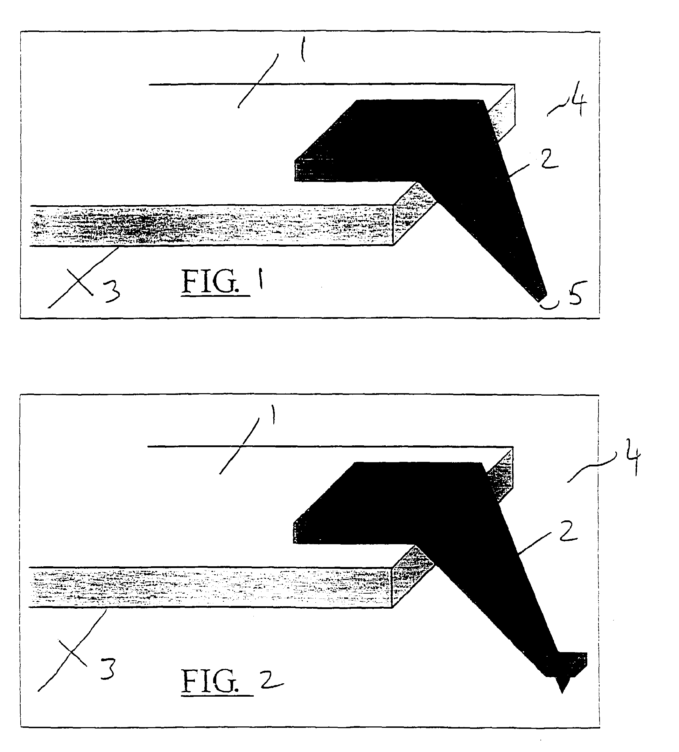

In an embodiment of the invention a probe, more in particular a probe tip configuration for use in scanning proximity microscopes is disclosed (Figs. 1 and 2). This probe comprises a mounting block 3 and a probe tip configuration. Said probe tip configuration comprises a cantilever beam 1 and a tip structure 4, where said cantilever beam 1 is fixed to the mounting block 3 at one end thereof and said tip structure 4 is fixed to the other free end of said cantilever beam 1. Said tip structure 4 comprises at least one small probe tip 5, placed on or integral with a sloping member 2 which is at an angle with respect to and attached to the cantilever beam 1.

This probe tip configuration can be used as a sensing element in a scanning proximity microscope. This special tip arrangement allows easy visualisation of the probe tip position when viewed from above. The adjustment of a maximum penetration depth into the sample is controlled, because the penetration is limited to the probe tip itself. The sloping member 2 can make contact with the sample surface without significant penetration because of its shape and without limiting the resolution because the probe tip 5 can be electrically and/or thermally and/or magnetically isolated from the sloping beam member 2. There is a significant advantage for electrical measurements because by isolating the sloping member, the interaction, e.g. the capacitive coupling, with the substrate is reduced. The maximum penetration depth can be altered by changing the dimensions, in particular the height of the probe tip 5. The characteristics of both the sloping member 2 and the probe tip 5 can be adapted to the physical quantity to be measured using different tip shapes and materials. This probe tip configuration can be used in a scanning proximity microscope, such as an AFM (Atomic Force Microscope), for topography measurements. This probe tip configuration is also especially suited as a SSRM (Scanning Spreading Resistance Measurements) probe, used for the determination of the resistance and carrier profile of a semiconductor element. Furthermore, this probe tip configuration is also suited for nano-potentiometry measurements of the electrical potential distribution on a semiconductor element. For the latter kind of measurements, a highly conductive tip is especially suited. The probe tip configuration may however also be used for other applications then the ones mentioned above.

In another embodiment of the invention a probe tip configuration is disclosed where the tip comprises a a sloping member 2 and two or more probe tips 5 on the end of the sloping member 2 which makes it possible to detect more than one signal at the same time using only one cantilever beam. The different probe tips can be electrically and/or thermally and/or magnetically isolated from each other and can have different characteristics. The different probe tips can also be used to detect different physical quantities. In particular this probe tip configuration allows the use of one or more probe tips as a current or voltage source. In this way, the other probe tips can be used to detect the generated signal(s).

The different parts of the probe as mounting block 3, cantilever beam 1, sloping member 2, and probe tip(s) 5 can be composed of the same material or different materials. Such materials may be for example Si, SiO₂, Si₃N₄, metals, and diamond. Depending on the application, the properties of the probe may be further improved by additional coatings, such as metals, hard metals, diamond, cubic boron nitride, SiO₂, and Si₃N₄.

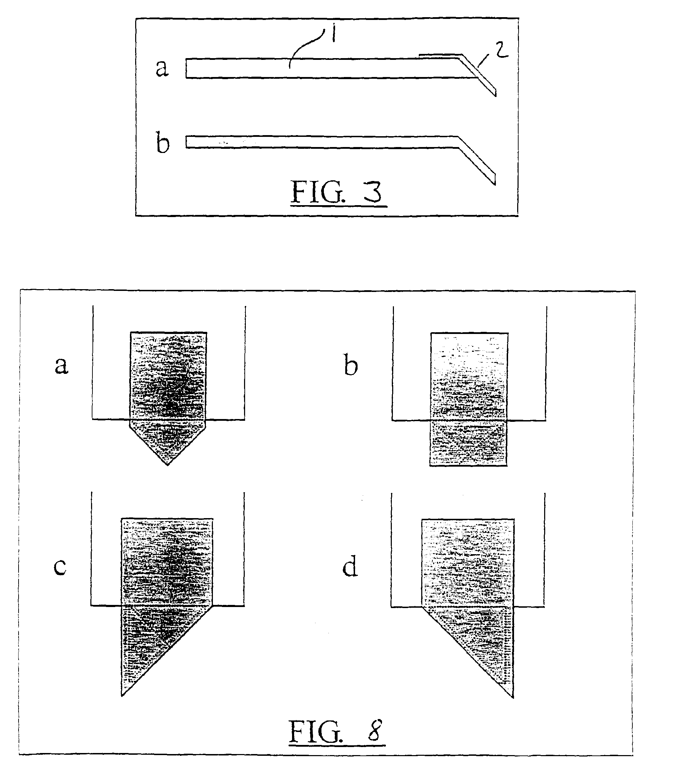

Depending on the application and the used microscope, the cantilever beam 1, the sloping member 2 and the mounting block 3 can have different shapes and different dimensions. The cantilever beam 1 and the sloping member 2 may be two parts joined together (Fig. 3A). Alternatively, the cantilever beam 1 and the sloping member 2 may be formed from a single material (Fig. 3B).

In a classical probe tip consisting of a single tip, changing the dimensions of the probe tip, in particular increasing the height, does increase the aspect ratio significantly. The mechanical stability of such high aspect ratio tips is limited, which makes them less suitable for electrical measurements where these tips are exposed to high forces being applied in order to provide a good electrical contact. Therefore this classical probe tip is only useful for a limited range of dimensions. The division of the probe tip arrangement into a sloping member 2 and the probe tip 5 itself in the present invention has the advantage that the sloping member can be adapted to the measurement set-up whereas the probe tip 5 can be optimised concerning the physical quantity to be measured. So there is no longer a direct coupling between the aspect ratio of the probe tip, mainly determined by the sloping member and the tip radius of the probe tip, which is determined by the probe tip itself. The slope height and width of the sloping member depends on the limitations of the measurement set-up, such as the required probe to sample distance, and can be adjusted in a wide range by changing the dimensions of the etch mask opening and/or by changing the etch procedure.

The dimensions and the properties of the small probe tip 5 depend on the sample surface to be analysed, on the physical quantity to be measured and on the desired resolution. A physical quantity to be measured with a probe tip configuration with one probe tip or with more then one probe tip can be, e.g. the electrical current, the electrical potential distribution, the topography of the sample, magnetic forces, electrostatic forces, and the thermal distribution. According to the physical quantity to be measured, the probe tip may be magnetic, electrical and/or thermal conductive. In order to achieve high resolution, the probe tip preferably has a small radius of curvature.

Additional special materials can be employed in order to get a probe tip with high hardness and low wear. The present invention allows the adjustment of a maximum sample penetration depth by changing the height of the probe tip. The probe tip is preferably pyramidal or conic shaped. The arrangement of the present invention makes it possible to produce AFM-probes with a small aspect ratio of the tip which are of interest for special electrical measurements. A higher aspect ratio as it is desired for topography measurements may also be achieved using a more cylindrical or conic shape for the probe tip.

The different probe tips of a probe configuration with more then one probe tip can be electrically isolated from each other. The isolated probe tips can be used to detect more than one signal at the same time using only one cantilever beam. In this configuration some probe tips may be used as a current or voltage source whereas other probe portions of a tip may be used to detect the generated signals. A probe tip configuration with two electrical isolated probe tips can be used in SSRM for the measurement of the spreading resistance without having a back contact and with four electrical isolated probe tips can be employed for localised FPR-measurements (Four-Point-Resistance).

The probes of the prior art can also be used for spreading resistance measurements but then also a contact at the backside of the sample has to be provided. Therefore a probe tip configuration with more then one adjacent probe tip as described is desirable.

United States patent 5540958 describes a probe with two cantilevers each having a probe tip. A first drawback of this solution is that one needs to control each cantilever seperately which is much more complicated and unreliable then in the present invention. A second drawback is that by using two cantilevers the distance between the probe tips is conventionall about ten times greater then in the invention because each cantilever has a certain minimal width mainly for stability reasons and there is also a minimal distance between the cantilever to allow proper use of such a probe.

In an embodiment of the invention a method of fabricating a probe tip configuration is disclosed where the tip structure comprises a sloping member and one probe tip. The shape of the sloping member is achieved by etching the substrate to form a pyramidal etch pit with sloping faces and then forming a member on one or more of the faces which meet in an apex region. The pit shape can be a truncated pyramid which forms a flat apex region. In particular a truncated pyramidal shape can be realised by employing an etching solution such as KOH for the etching of the substrate, e.g. silicon, which results in a more truncated pyramidal etch pit. The probe tip may be formed integrally with the member. Alternatively, a probe tip can be formed on the cantilever beam by forming a second small etch pit in the apex region of the first etch pit. The second etch pit on the bottom of the first etch pit is formed preferably by an anisotropic etching procedure resulting in pyramidal shape. The substrate is finally removed using a thinning window at the backside of the substrate resulting in release of the sloping member and a preferably pyramidal or conic shaped probe tip having a very small radius of curvature in order to achieve a high resolution. The sloping member and the probe tip can also be composed of different materials.

In another embodiment of the invention a method of fabricating a probe tip configuration is disclosed where the tip configuration comprises a sloping member and more then one second probe tip. To do this more than one small etch pit is formed on the bottom of the first etch pit, e.g. by an anisotropic etching procedure resulting in pyramidal shapes. The substrate is finally removed using a thinning window at the backside of the substrate resulting in the freeing of the sloping member and preferably pyramidal or conic shaped probe tips having a very small radius of curvature. The different probe tip can be electrically and/or thermally isolated from each other.

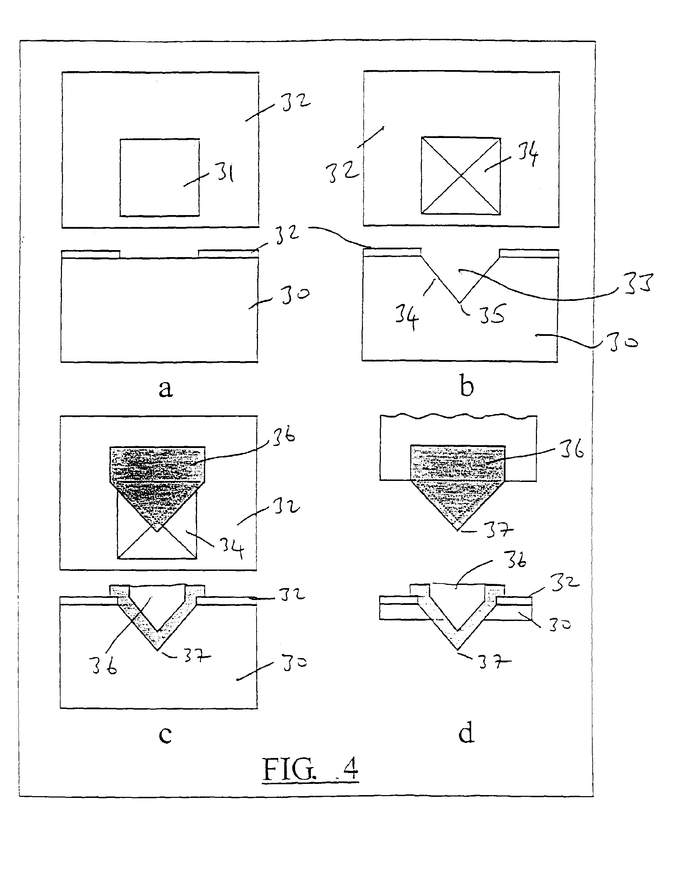

In Fig. 4 the basic steps in the manufacture of an integral probe tip and sloping member are shown. As a starting material a substrate 30, which can be, e.g. a silicon or a glass wafer, is used. In the example a (100) oriented Silicon wafer is used (Fig. 4A).

The substrate is covered with a first hard mask layer 32 by means of oxidation or a deposition technique. This hard mask layer can be selected from the group of silicon oxides, silicon nitrides, silicon oxynitrides, metals or a combination thereof.

This hard mask layer is patterned by means of a dry etch procedure, a wet etch procedure or a combination thereof using a lithographic developed resist as a mask to form a square or quadratic hole 31. This first hard mask layer is used as an etch mask layer.

The substrate is then exposed to an etching solution (Fig. 4B). The choice of the etching solution determines the shape of sloping member of the tip structure which can be formed from a pyramidal, conical, or cylindrical etch pit 33. When chosing an etching solution, such as KOH, the shape of the etch pit 33 is pyramidal. The pyramidal etch pit has a plurality of sloping and converging faces or sidewalls 34 which converge at a sharp apex region 35.

By a procedure of deposition of mask layers and patterning at least one layer 36 of at least one material is then formed (Fig. 4C,) on one sidewall 34 including deposition in the apex 35 using the later as a mould to form the probe tip 37. This can be done by deposition (e.g. a metal) over the whole surface followed by a lift-off step. Alternatives are by plating (e.g. nickel, gold), by selective deposition (e.g. diamond).

The sloping member 36 and the probe tip 37 are etched free (Fig. 4D). This can be done by wet and/or dry etching using a thinning window at the backside of the substrate. The probe tip 37 is formed by being moulded in the apex portion 35 of the etch pit 33.

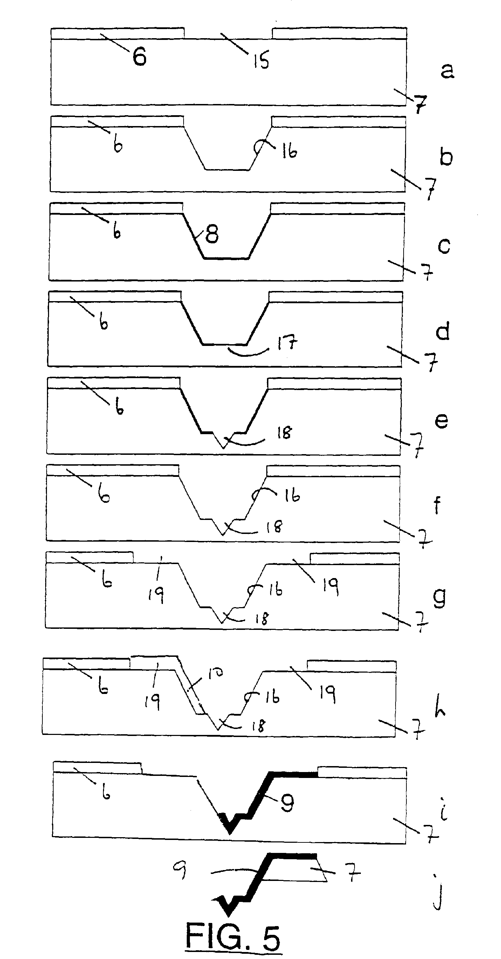

A further embodiment of detailed process scheme (Fig. 5) for making a probe tip configuration is described. It is clear that some of the applied process steps and materials may be replaced by others giving the same result.

As a starting material a substrate 7, which can be, e.g. a silicon or a glass wafer, is used. In the example a (100) oriented Silicon wafer is used.

The substrate is covered with a first hard mask layer 6 by means of oxidation or a deposition technique. This hard mask layer can be selected from the group of silicon oxides, silicon nitrides, silicon oxynitrides, metals or a combination thereof.

This hard mask layer is patterned 15 (Fig. 5, step a) by means of a dry etch procedure, a wet etch procedure or a combination thereof using a lithographic developed resist as a mask. This first hard mask layer is used as an etch mask layer.

The substrate is then exposed to an etching solution (Fig. 5, step b). The choice of the etching solution determines the shape of the sloping member, which can be truncated pyramidal, truncated conic, cylindrical. When choosing an etching solution, such as KOH, the shape is a truncated pyramid. The pyramidal etch pit has a plurality of sloping and converging faces or sidewalls 16 which converge at an apex region. The etching has to be stopped when the truncated inverted pyramid is formed. A good control over the etch depth is required. This can be done by careful controlling the important parameters such as the size of the etch window in the hard mask layer, the etching solution and the etching time.

The sidewalls 16 and the bottom of the etch pit are then covered with a second hard mask layer 8 5Fig. 5, step c). This can be done by oxidation, PECVD (Plasma Enhanced Chemical Vapour Deposition) or metal deposition. This hard mask layer can be selected from the group of silicon oxides, silicon nitrides, silicon oxynitrides, metals or a combination thereof.

The second hard mask layer is patterned (Fig. 5, step d) by means of a dry etch procedure, a wet etch procedure or a combination thereof using an optical or e-beam lithographic developed resist as a mask. As an alternative also a focused ion beam can be used to open this second hard mask layer. Regardless of the method used, a small square or circular opening 17 in the second hard mask layer is formed at the bottom of the first etch pit. This second hard mask layer is used as an etch mask.

The sample is then exposed to the anisotropic etchant, e.g. KOH, (Fig. 5, step e) and the inverted form 18 of a small probe tip, having a conic or pyramidal shape, is formed at the bottom of the first etch pit.

The second hard mask layer inside the first etch pit is removed (Fig. 5, step f) using a lithographic developed resist as a mask by means of a wet etching step and/or a dry etching step. In an alternative way only a portion of the second hard mask layer is removed so as to allow formation of the sloping member without using a third masking layer.

Next, parts 19 of the first hard mask layer (Fig. 5, step g) are removed, using a lithographic developed resist as a mask, by means of a wet etching step and/or a dry etching step. In an alternative way the first hard mask layer can remain as it is thereby serving as a first insulating or conductive layer.

At this stage the sidewalls 16 and the bottom of the etch pit are then covered with a third hard mask layer (10). This can be done by oxidation, PECVD (Plasma Enhanced Chemical Vapour Deposition) or metal deposition. This hard mask layer can be selected from the group of silicon oxides, silicon nitrides, silicon oxynitrides, metals or a combination thereof.

The third hard mask layer is patterned (Fig. 5, step h) by means of a dry etch procedure, a wet etch procedure or a combination thereof using an optical or e-beam lithographic developed resist as a mask. As an alternative also a focused ion beam can be used to open this third hard mask layer. Regardless of the method used, at least one face of the pyramidal first etch pit is exposed.

At least one layer of at least one material 9 is then deposited in the patterned area. This can be done by deposition (e.g. a metal) over the whole surface followed by a lift-off step (Fig. 5, step i). Alternatives are by plating (e.g. nickel, gold), by selective deposition (e.g diamond). This procedure can be performed for the whole exposed area at once or in different steps for the different areas like the sloping member, the probe tip, the cantilever beam. Said steps can include process steps as lithography, deposition of conducting and/or non-conducting materials, and etching steps.

The sloping member and the probe tip are etched free (fig. 5, step j). This can be done by wet and/or dry etching using a thinning window at the backside of the substrate.

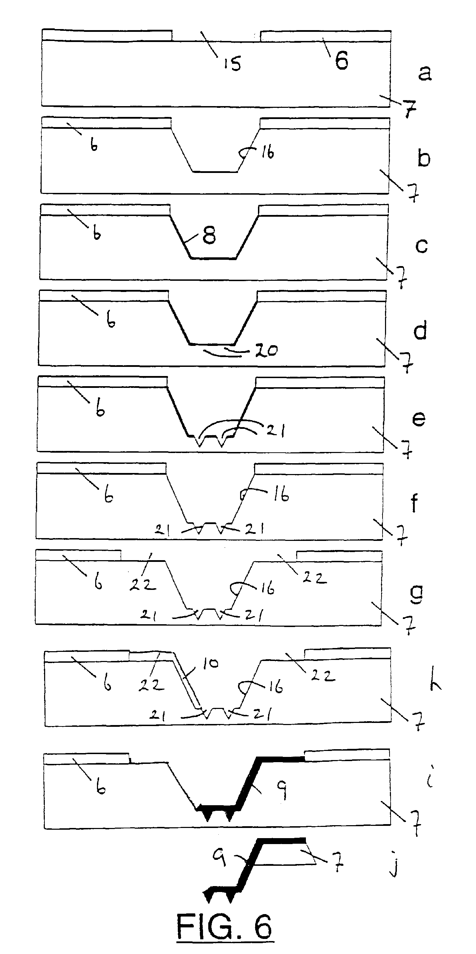

In another particular embodiment of the invention a detailed process scheme (Fig. 6) for making a probe tip configuration comprising a sloping sloping member and more than one probe tip is disclosed. It is clear that some of the applied process steps and materials may be replaced by others giving the same result.

As a starting material a substrate 7, which can be for example a silicon or a glas wafer, is used. In the example a (100) oriented Silicon wafer is used.

The substrate is covered with a first hard mask layer 6 by means of oxidation or a deposition technique. This hard mask layer can be selected from the group of silicon oxides, silicon nitrides, silicon oxynitrides, metals or a combination thereof.

This hard mask layer is patterned 15 (Fig. 6, step a) by means of a dry etch procedure, a wet etch procedure or a combination thereof using a lithographic developed resist as a mask. This first hard mask layer is used as an etch mask layer.

The substrate is then exposed to an etching solution (Fig. 6, step b). The choice of the etching solution determines the shape of the sloping member which can be truncated pyramidal, truncated conic, cylindrical. When choosing an etching solution, particularly when choosing KOH, the shape is a truncated pyramid having a plurality of sloping and converging faces or side walls 16 which converge to an apex region. The etching has to be stopped when the truncated inverted pyramid is formed. A good control over the etch depth is required. This can be done by careful controlling the important parameters such as the size of the etch window in the hard mask layer, the etching solution and the etching time.

The sidewalls 16 and the bottom of the etch pit are then covered with a second hard mask layer 8. This can be done by oxidation, PECVD (Plasma Enhanced Chemical Vapour Deposition) or metal deposition. This hard mask layer can be selected from the group of silicon oxides, silicon nitrides, silicon oxynitrides, metals or a combination thereof.

The second hard mask layer is patterned (Fig. 6, step d) by means of a dry etch procedure, a wet etch procedure or a combination thereof using an optical or e-beam lithographic developed resist as a mask. As an alternative also a focused ion beam can be used to open this second hard mask layer. Regardless of the method used, small squares or circular openings 20 in the second hard mask layer are formed at the bottom of the first etch pit. This second hard mask layer is used as an etch mask.

The sample is then exposed to the anisotropic etchant, e.g. KOH (Fig. 6, step e) and the inverted form 21 of the probe tips , having a conic or pyramidal shape, are formed at the bottom of the first etch pit.

The second hard mask layer inside the truncated inverted pyramidal pit is removed (Fig. 6, step f) using a lithographic developed resist as a mask by means of a wet etching step and/or a dry etching step. In an alternative way a portion of the second hard mask layer is left and used instead of the third masking layer.

Next, the cantilever and cantilever beam are defined (Fig. 6, step g) by removing the exposed parts of the first hard mask layer, using a lithographic developed resist as a mask, by means of a wet etching step and/or a dry etching step. In an alternative way the first hard mask layer can remain as it is thereby serving as a first insulating or conductive layer.

At this stage the sidewalls and the bottom of the etch pit are then covered with a third hard mask layer 10. This can be done by oxidation, PECVD (Plasma Enhanced Chemical Vapour Deposition) or metal deposition. This hard mask layer can be selected from the group of silicon oxides, silicon nitrides, silicon oxynitrides, metals or a combination thereof.

The third hard mask layer is patterned (Fig. 5, step h) by means of a dry etch procedure, a wet etch procedure or a combination thereof using an optical or e-beam lithographic developed resist as a mask. As an alternative also a focused ion beam can be used to open this third hard mask layer. Regardless of the method used, at least one face of the pyramidal first etch pit is exposed.

At least one layer of at least one material 9 is then deposited in the patterned area. This can be done by deposition (e.g. a metal) over the whole surface followed by a lift-off step (fig. 6, step i). Alternatives are by plating (e.g. nickel, gold), by selective deposition (e.g diamond). This procedure can be performed for the whole exposed area at once or in different steps for the different areas or parts of the different areas like the sloping member, the probe tips, and the first cantilever beam. At this point, additional process steps may be carried out in order to isolate the different probe tips one from another and/or to isolate the sloping member from the probe tip(s). Said isolation can be an electrical and/or thermal and/or magnetic isolation. Said steps can include process steps as lithography, deposition of conductive and/or non-conductive materials, and etching steps. The different probe tips of a probe configuration with more than one probe tip can be electrically isolated. This can be done using additional process steps such as optical or e-beam lithography combined with metal deposition, focused ion beam induced metal deposition or electron beam induced metal deposition. The isolated tips can be used to detect more than one signal at the same time using only one cantilever beam. In this configuration some probe tips can be used as a current or voltage source whereas other probe tips can be used to detect the generated signals. A probe tip configuration with two electrical isolated probe tips can be used in SSRM for the measurement of the spreading resistance without having a back contact and with four electrical isolated probe tips can be employed four localised FPR-measurements (Four-Point-Resistance). Additional process steps can be employed in order to get a probe tip with high hardness and low wear. An improved probe performance may also be achieved by an additional implantation, diffusion or silicidation step or by depositing additional coatings such as metals, hardmetals, diamond, and cubic boron nitride.

The cantilever beam is formed and the sloping member and the probe tips are etched free (fig.6, step j). This can be done by wet and/or dry etching using a thinning window at the backside of the substrate. The two probe tips can be isolated while forming these. In an embodiment of this technique, the two probe tips can be isolated by the use of lithography patterning techniques. The step of isolating the two probe tips can also be executed after the step of forming them.

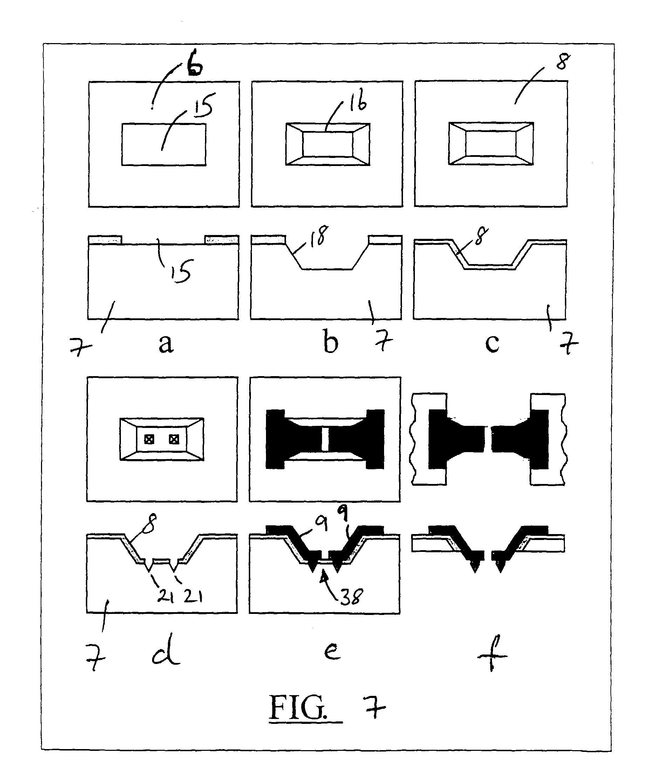

For instance the formed probe tip configuration can be cut in different parts using techniques known in semiconductor device processing. A method of manufacture of such probe tip arrangements is shown in Figs. 7A to F. The manufacturing sequence generally follows that of Fig. 6. In an embodiment of the present invention the material 9 is deposited onto the first etch pit with the second hard mask 8 still in place leaving a space 38 between the probe tips formed in the small etch pits 21. As shown in Fig. 7F, etching back the substrate frees both sloping members and probe tips. Alternatively, the material 9 may be deposited over the whole of the first etch pit and then the probe tips separated by sawing through between them. The etch pit can then be sawn through in the middle to generate two probe tips very close together. Resulting probe tip configurations are shown in Figs. 9A and B. Such a probe tip configuration being part of a probe for use in a scanning proximity microscope comprises at least two cantilever beams each having a tip structure being fixed to an end of said cantilever beam and each tip structure including a sloping member and a probe tip, said sloping member being connected to said end of said cantilever beam, said probe tip being placed on the end of said sloping member or being integral therewith and said probe tips being in a close neighbourhood configuration of about 10 µm or smaller.

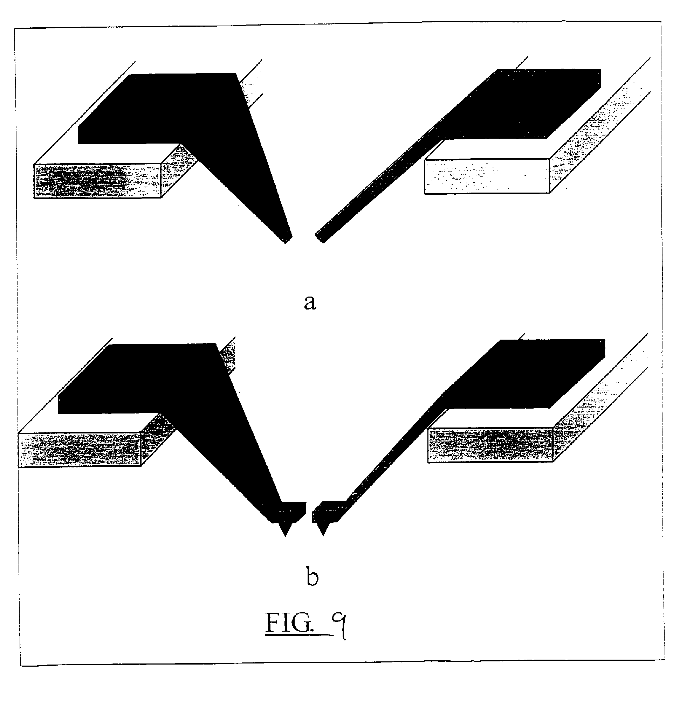

A probe tip configuration is disclosed, the probe tip being part of a probe for use in a scanning proximity microscope comprising at least one cantilever beam having a tip being fixed to an end of said cantilever beam and said tip being visible in a top view configuration from substantially above said cantilever beam. This probe tip configuration can have two or more cantilever beams, each having a tip being fixed to an end of said cantilever beam and said tip being visible in a top view configuration from substantially above said cantilever beam. A method is disclosed for fabricating such probe tip configuration, the method comprising the steps of: etching a substrate to thereby create a first etch pit; covering only a part of said etched pit with at least one material while covering at least part of said substrate; and etching through a mask window at the backside of said substrate to thereby form said cantilever beam and simultaneously etching free said tip. The method can further comprise the steps of: etching said substrate using a first patterned hard mask layer as an etch mask, said etching step creating said first etch pit; and defining the cantilever beam by removing the exposed parts of said first hard mask layer. In an embodiment, said part of said etched structure can be about a quarter of said etched pit. The teaching given for the specific process steps and materials of the other objects and aspects of the present invention can be applied to this object wherein a probe tip configuration is disclosed that allows for visualising the probe tip while measuring with the probe. The disclosure according to this object of the invention solves the problem in the prior art of pyramidal tips which are integrated into a cantilever but which have the disadvantage that it is very difficult to bring the tip to the region of interest that is to be investigated during for instance the AFM measurement. This is due to the fact that the tip area in prior art probe tip configurations is covered by the cantilever and, therefore, the region of interest cannot be seen in an optical microscope. In an embodiment of this object of the invention, a novel tip configuration is developed where only a quarter of the pyramidal etch pit is filled (Fig. 8A). In this way, the tip can be placed to the outer end of the cantilever and the region of interest can now be seen in the optical microscope. Therefore, it is much easier to bring the tip into position. Further advantages of the quarter-pyramidal tip are the compatibility with the existing technology for the fabrication of metal tips which are integrated into a silicon cantilever. It is also suited for batch fabrication using standard processing techniques. It is also expected that the quarter-pyramidal tip will have less stray capacity when it is used as probe tip in scanning capacitance microscopy (SCM). The quarter-pyramidal tip has the potential to replace the classical pyramidal tip. A procedure for the fabrication of the quarter-pyramidal tip is developed according to the above teachings. Such a tip which is produced and is integrated into a silicon cantilever. A protoptype is fabricated. A mask design for these probes can be made in order to fabricate such probes on a larger scale.

The sloping member may be formed on more than just one face of the etch pit to form sloping members with one half pyramidal form as shown in Figs. 8A to D.

## Claims

1. A method of fabricating a probe tip configuration comprising at least one cantilever beam and at least one probe tip structure, said probe tip structure comprising a sloping member and a probe tip, said method comprising the steps of:
etching a substrate using a first patterned hard mask layer as an etch mask, said etching step creating a first etch pit;
etching at least one second etch pit on the bottom of said first etch pit using a second patterned hard mask layer as an etch mask;
forming on only a part of the etched structure including said second etch pit at least one material thereby forming said sloping member and said probe tip.

2. A method according to claim 1, further comprising the step of etching through a mask window at the backside of said substrate to thereby form said cantilever beam and simultaneously etching free said probe tip and said sloping member.

3. A method as recited in claim 1 wherein by etching said substrate using said first hard mask layer as an etch mask, a cylindrical or a truncated pyramidal or a truncated conic shaped etch pit is formed.

4. A method as recited in claim 1 wherein by anisotropic etching using said second hard mask layer as an etch mask, a pyramidal or a conic shaped etch pit is formed.

5. A method as recited in claim 1 where said hard mask layers are selected from the group of oxides, nitrides, oxynitrides and metals.

6. A method as recited in claim 1 wherein said material is selected from the group of oxides, nitrides, oxynitrides, insulating materials, semi-conductive materials, metals, hardmetals and diamond.

7. A method of fabricating a probe tip configuration comprising a cantilever beam and a probe tip structure, said probe tip structure comprising a sloping member and at least one probe tip, said method comprising the steps of:
etching a substrate to create a first, etched pit, the pit which meet in an apex region;
masking at least one face of the pit but not masking the complete pit;
forming a material on the remaining parts of the pit including the apex region to thereby form the probe tip and the sloping member.

8. A method according to claim 7, further comprising the step of etching through a mask window at the backside of said substrate to thereby form said cantilever beam and simultaneously etching free said probe tip and said sloping member.

9. A method as recited in claim 7 wherein said masking step forms a cylindrical or a substantially pyramidal, truncated pyramidal, conical or a truncated conical shaped etch pit.

10. A method as recited in claim 7 where mask layers for said masking step are selected from the group of oxides, nitrides, oxynitrides and metals.

11. A method as recited in claim 7 wherein said material is selected from the group of oxides, nitrides, oxynitrides, insulating materials, semi-conductive materials, metals, hardmetals and diamond.
